# EUROPEAN PATENT APPLICATION

(11) **EP 0 787 520 A1**
(43) Date of publication of application: **06.08.1997**
(21) Application number: 97200172.1
(22) Date of filing: 22.01.1997
(51) Int. Cl.: B01D 39/20

(54) **Method for manufacturing a submicronic filter cloth, and the cloth manufactured thereby**

(30) Priority: 01.02.1996 IT RE960001
(71) Applicant: DIEMME S.P.A., I-48022 Lugo Ravenna (IT)
(72) Inventor: Da Prat Sante, I 48022 Lugo (Ravenna) (IT)
(74) Representative: Corradini, Corrado

(57) **Abstract**

In a method for manufacturing submicronic filter cloths from cloths obtained by weaving steel threads, the starting cloth is subjected to a rolling process, possibly multi-stage, which reduces its thickness by between 20 and 30 percent, with simultaneous reduction in the passage cross-section of the fabric.

## Description

This patent pertains to the field of fluid filtration in general, and in particular to the field of forced filtration, for retaining particles of a size less than one micron.

The systems currently known in practice for effecting this type of filtration, such as processes using a bag filter followed by a submicronic membrane, present insurmountable problems which considerably limit their application at the industrial level.

Processing large fluid quantities by membranes able to retain very small particles, for example of the order of half a micron, is as yet not possible economically, not only because of the high cost of submicronic membranes, but also because of the operating limits posed by the characteristics of the polymers used for constructing the filter plates, which are poorly resistant to high temperature and chemical action.

Moreover, it is not possible to treat very viscous products in currently available filters, because of the poor mechanical strength of the filter plates at high pressure gradients.

A further impediment to the industrial application of known techniques is the difficulty of cleaning the filters by back-wash, ultrasonic or chemical attack methods.

The object of the present invention is to obviate said operational limits by providing a filter cloth with which filters can be formed able to continuously treat large quantities of viscous liquids on an industrial level, at temperatures which can exceed 400°C.

This object is primarily attained, according to the invention, by virtue of a metal filter cloth of the usual commercially available type, having a mesh of the order of 300-2000.

Said cloth is subjected to a plastic deformation process, by rolling or calendering, which results in partial closure of the voids between the constituent threads of the fabric, so substantially reducing their size.

The cloth preparation process can be completed by a further stage consisting of surface treatment comprising electrodeposition of noble metals or their alloys in an inert gas stream, to improve the abrasion resistant and chemical resistant characteristics.

The noble metals suitable for the purpose include titanium, nickel, chromium and zirconium.

The cloth formed in this manner can be used in manufacturing candle filters, disc filters, plate filters and the like, as it can be bent, cut, etc.

The resultant filters can be regenerated simply by back-washing or other systems such as ultrasound or pulsating magnetic fields, in a manner much more vigorous than known filters provided with polymer or ceramic membranes.

The merits and characteristics of the invention will be more apparent from the description of one embodiment thereof given hereinafter by way of non-limiting example.

In manufacturing the filter cloth according to the invention it has been found convenient to start from a metal fabric of "Touraille" type, consisting of 19/8 AISI 304 stainless steel threads of the following characteristics.

**TABLE 1**

| Thickness µm | thread ø µm | mesh | passage | | permeability | | weight kg/m² |
|---|---|---|---|---|---|---|---|
| | | | absolute µm | nominal µm | water 1/cm²/min | air Nm^{3/h} | |
| 80 | 35/25 | 325/2300 | 9-10 | 2 | 2.50 | 1.0 | 0.46 |

In Table 1 the mesh number indicates the number of mesh apertures per inch in the warp and weft direction respectively.

A rectangular sheet of said cloth was cut into six parts from which samples were separated, and of which some were subjected to a continuous rolling process by a rolling mill of the following characteristics:

| | | |
|---|---|---|
| Rolls: | length | 300 mm |
| | diameter | 150 mm |
| | r.p.m. | 20 r.p.m. |
| | rolling rate | 9.4 m/min |
| | maximum opening | 50 mm |

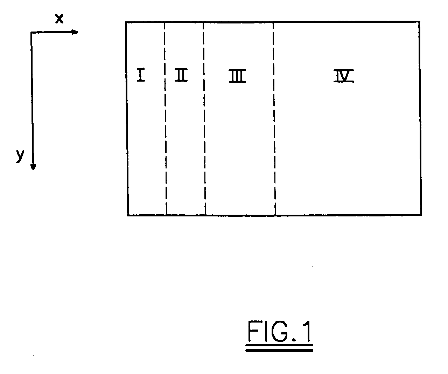

Specifically, from the cloth illustrated on the accompanying Figure 1, in which y indicates the warp direction and x indicates the weft direction, four parts I, II, III, IV, were initially separated.

Samples 1 and 2 were obtained from the part I, the part II formed sample 3, samples 4 and 5 were obtained from the part III, and the part IV formed sample 6.

A rolling test was carried out on sample 1, gradually reducing the cloth thickness from 80 to 65 microns.

Sample 2 was rolled with the aid of rolling oil, achieving a thickness of 60 microns.

The rolling was carried out by gradually lowering the upper roll of the rolling mill.

Sample 6 was maintained untreated to allow experimental comparison by the method described hereinafter.

The characteristics of samples 1 to 5 before and after rolling are stated in the following table.

**TABLE 2**

| | Thickness (microns) | | Length (mm) | | Width (mm) | |
|---|---|---|---|---|---|---|
| | before | after | before | after | before | after |
| Sample 1 | 80 | 65 | 817 | 824 | 129 | 129 |
| Sample 2 | 80 | 60 | 817 | 824 | 129 | 129 |
| Sample 3 | 80 | 60 | 816 | 831 | 133 | 133 |
| Sample 4 | 80 | 63 | 406 | 410 | 148 | 149 |
| Sample 5 | 80 | 65 | 408 | 412 | 148 | 149 |

After rolling, sample 3 was divided into two parts 3a and 3b, one of which, 3a, was then subjected to chemical and physical treatment to harden the cloth surface and make it more resistant to abrasion.

The treatment consists of depositing pure titanium and/or titanium nitride under high vacuum. The reactor used consists of a steel chamber in which a vacuum of about 1x10⁻⁴ mbar is formed.

The treatment comprised the following steps:
1) sample preparation with freon vapour followed by washing with liquid freon;
2) treatment with ultrasound during the wash step to improve the sample cleaning, so avoiding problems of coating inconsistency;
3) depressurization of the reaction chamber to 1x10⁻⁴ mbar;
4) electronic cleaning of the sample;
5) plasma heating of the reaction chamber;
6) vacuum deposition of the sublimed titanium for about 5 minutes;
7) nitrogen injection;
8) controlling the reaction temperature to between 400°C and 500°C, and controlling the vapour pressure to a value of the order of 10⁻⁴ mbar;
9) titanium nitride deposition for about 15 minutes.

The deposited titanium and titanium nitride had a thickness of at least 2 microns, it being also noted that the process increases in effectiveness up to a thickness at least close to 5 microns.

A high energy beam generator gun bombards the titanium crucible, the high temperature subliming the metal, the atoms of which are ionized by a tungsten resistance element.

The cations (atoms from which an electron has been removed) migrate from the ionization region to the cathode region represented by the metal mesh, consequently depositing on its surface.

The low pressure favours the deposition of the titanium, which may or may not be combined with the nitride ion provided by a very pure nitrogen gas stream.

The cloths treated in this manner were used for comparative tests of filtration through a turbid liquid passage area of 0.005 square metres.

The suspension to be filtered was prepared from 2.5 g of sand blend 75 clay in 2.5 litres of water. After agitation and awaiting 5 minutes for sedimentation of the largest particle size fraction, the supernatant was used as the turbid suspension for filtration.

The sand blend 75 clay used was a commercial preparation of WBB Devon Clays Ltd., in accordance with ISO standard 9002.

The particle size distribution curve for the turbid suspension to be filtered can be obtained from the following table.

**TABLE 3**

| | | | | | | | | | | |
|---|---|---|---|---|---|---|---|---|---|---|
| granule size (microns) | 0.5 | 0.6 | 0.7 | 0.8 | 0.9 | 1 | 2 | 3 | 5 | 10 |
| % | 10 | 15 | 20 | 25 | 30 | 69 | 80 | 98 | 99 | 100 |

### FILTRATION TESTS

Three comparative tests were carried out, indicated by A, B and C, using the starting cloth for test A, the rolled cloth for test B, and the rolled cloth treated by the nitriding process for test C.

The particle size distribution curve of the filtrate obtained from test A, ie using the starting cloth, can be obtained from the following table.

**TABLE 4**

| | | | | | | | | | | |
|---|---|---|---|---|---|---|---|---|---|---|
| granule size (microns) | 0.5 | 0.6 | 0.7 | 0.8 | 0.9 | 1 | 4 | 5 | 8 | 9 |
| % | 10 | 15 | 20 | 25 | 30 | 69 | 96 | 98 | 100 | 100 |

The particle size distribution curve of the filtrate obtained from test B, ie using the rolled cloth of sample 3, can be obtained from the following table.

**TABLE 5**

| | | | | | | | | | |
|---|---|---|---|---|---|---|---|---|---|
| granule size (microns) | 0.3 | 0.4 | 0.5 | 0.7 | 0.9 | 1 | 4 | 5 | 8 |
| % | 10 | 20 | 75 | 85 | 94 | 95 | 96 | 98 | 100 |

The particle size distribution curve of the filtrate obtained from test C, ie using the rolled and then nitrided cloth of sample 3, can be obtained from the following table.

**TABLE 6**

| | | | | | | | | |
|---|---|---|---|---|---|---|---|---|
| granule size (microns) | 0.3 | 0.4 | 0.5 | 0.7 | 0.9 | 1 | 4 | 5 |
| % | 15 | 25 | 80 | 87 | 96 | 98 | 99 | 100 |

The aforelisted tables show the percentage of liquid which has passed through the filter, and the maximum size of the granules present therein.

## Claims

1. A method for manufacturing submicronic filter cloths from cloths obtained by weaving steel threads, characterised in that the starting cloth is subjected to a rolling process, possibly multi-stage, which reduces its thickness by between 20 and 30 percent, with simultaneous reduction in the passage cross-section of the fabric.

2. A method as claimed in claim 1, characterised in that the starting cloth is a cloth having a mesh of the order of 300/2000.

3. A method as claimed in claim 1, characterised in that the starting cloth is a fabric of "touraille type.

4. A method as claimed in claim 1, characterised in that the starting cloth has a thickness of between 70 and 90 microns.

5. A method as claimed in claim 1, characterised in that the starting cloth is formed by weaving threads having a diameter of between 20 and 40 microns.

6. A method as claimed in claim 4, characterised in that the threads are of stainless steel.

7. A method as claimed in claim 1, characterised in that the starting cloth is subjected after rolling to a chemical-physical treatment comprising electrodeposition of a noble metal to improve its abrasion resistance and to reduce its passage area.

8. A method as claimed in claim 7, characterised in that the noble metal is one of the following: titanium, chromium, zirconium, nickel.

9. A method as claimed in claim 7, characterised in that after its rolling, the cloth treatment comprises the following steps:
- preparing the sample by washing with a liquid inert gas;
- treatment with ultrasound during the wash step to improve the sample cleanliness;
- placing the sample in a reaction chamber;
- depressurizing the reaction chamber to a pressure of 1x10⁻⁴ mbar;
- electronic cleaning of the sample;
- depositing the noble metal and an alloy thereof.

10. A method as claimed in claim 9, characterised in that the noble metal is titanium, and the alloy is titanium nitride.

11. A method as claimed in claim 10, characterised in that the pure titanium is deposited under high vacuum in a reactor consisting of a steel chamber in which a vacuum of about 1x10⁻⁴ is formed, a high energy beam generator gun bombarding the titanium crucible for a time of between 5-10 minutes and a maximum of 3-4 hours, the titanium subliming and its atoms being ionized by a tungsten resistance element so that they migrate to the cathode region formed by the sample, and consequently deposit on its surface.

12. A method as claimed in claim 10, characterised in that the titanium nitride is deposited following injection of very pure nitrogen into the crucible for a time of between 12 and 18 minutes.

13. A method as claimed in claim 10, characterised in that the reaction takes place at a temperature of between 400°C and 500°C at a pressure of the order of 10⁻⁴ mbar.
